(19) Europäisches Patentamt
European Patent Office
Office européen des brevets

(11) EP 4 322 026 A1

(12) **EUROPEAN PATENT APPLICATION**

(43) Date of publication:
**14.02.2024 Bulletin 2024/07**

(21) Application number: **22192695.9**

(22) Date of filing: **29.08.2022**

(51) International Patent Classification (IPC):
**G06F 16/55** (2019.01)    **G06N 3/0455** (2023.01)
**G06N 3/096** (2023.01)    **G06N 3/09** (2023.01)
**G06V 10/82** (2022.01)

(52) Cooperative Patent Classification (CPC):
**G06F 16/55; G06N 3/0455; G06N 3/09;
G06N 3/096; G06V 10/778; G06V 10/82;
G06V 20/56**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.08.2022 NL 2032721**

(71) Applicant: **NavInfo Europe B.V.
5657 DB Eindhoven (NL)**

(72) Inventors:
• **JEEVESWARAN, Kishaan
5657 DB Eindhoven (NL)**
• **BHAT, Prashant Shivaram
5657 DB Eindhoven (NL)**
• **ARANI, Elahe
5657 DB Eindhoven (NL)**
• **ZONOOZ, Bahram
5657 DB Eindhoven (NL)**

(74) Representative: **van Breda, Jacobus
Octrooibureau Los & Stigter B.V.
P.O. Box 20052
1000 HB Amsterdam (NL)**

(54) **A FRAMEWORK FOR CONTINUAL LEARNING METHOD IN VISION TRANSFORMERS WITH REPRESENTATION REPLAY**

(57) A computer-implemented method for continual task learning in a training framework, said method comprising the steps of:
- providing a first deep neural network (θw), comprising a first function (Gw) and a second function (Fw) which are nested;
- providing a second deep neural network (θs) comprising a third function (Fs) as a counterpart to the second nested function (Fw);
- feeding input images to the first neural network (θw), such as through a filter and/or via patch embedding;
- generating representations of task samples using the first function (Gw);
- providing a memory (Dm) for storing at least some of the generated representations of task samples and/or having pre-stored task representation;
- providing the generated and memory stored representations of task samples to the second function (Fw);
- providing memory stored representations of task samples to the third function (Fs).

_100_

Fig. 1

EP 4 322 026 A1

**Description**

The present invention relates to method for continual task learning, a data processing apparatus comprising means for carrying out said method, a computer program to carry out said method, and at least partially autonomous driving system comprising a neural network that has been trained using said method.

Globally speaking, research in the field of artificial intelligence and deep learning has resulted in deep neural networks (DNNs) that achieve compelling performance in various domains [1, 2, 3]. Different types of architectures have been proposed in the deep learning literature to solve various tasks in computer vision and natural language processing [9, 10]. Transformers have been the dominant choice of architecture in natural language processing [11] and the recent breakthrough of Transformers in image recognition [47] motivated the community to adapt them to other vision tasks including object detection [12] and depth prediction [13]. Transformers in the computer vision domain is dubbed "Vision Transformers" [47]. It has also been shown that Transformers are robust compared to CNNs and make more reliable predictions [23]. They employ repeated blocks of Multi-Head Self Attention(MHSA) to learn relationships between different patches of an image at every block.

Most of the deep learning literature focuses on learning a model on a fixed dataset sampled from the same distribution [4] and are incapable of learning from sequential data over time. Continual learning [6, 7, 8, 15] is a research topic that studies the capability of deep neural networks to constantly adapt to data from new distributions while retaining the information learned from old data (consolidation) [7]. In an ideal continual learning setting, the model should sequentially learn from data belonging to new tasks (either new domains or new set of classes), while not forgetting the information learned from the previous tasks. Such a model would be more suitable for deployment in real life scenarios such as robotics and autonomous driving, where learning, adapting and making decisions continuously is a primary requirement.

In order to elucidate the concepts of (i) continual task learning and (ii) transformers in a continual task learning framework both concepts are first discussed in relationship to the prior art below.

(i) Continual Learning has received increased attention in recent years due to its implications in many applications such as autonomous driving and robotics. DNNs are typically designed to incrementally adapt to stationary data streams shown in isolation and random order [24]. Therefore, sequentially learning continuous stream of data causes catastrophic forgetting of previous tasks and overfitting on the current task. Approaches to address catastrophic forgetting can be broadly divided into three categories: regularization-based approaches [18, 25, 26] which penalize the changes to the important parameters pertaining to previous tasks, parameter-isolation methods [27] which allocate distinct set of parameters for distinct tasks and rehearsal-based approaches [28, 29, 30} which store old task samples, and replay them alongside current task samples. Experience-Rehearsal (ER) mimics the association of past and present experiences in humans [31] by interleaving samples belonging to old tasks in the form of images while learning new tasks, and is fairly successful in mitigating forgetting among aforementioned methods across multiple CL scenarios [46].

Complementary Learning Systems (CLS) posits that the ability to continually acquire and assimilate knowledge over time in the brain is mediated by multiple memory systems [33]. Inspired by the CLS theory, CLS-ER [22] proposed a dual-memory method which maintains short-term and long-term semantic memories that interact with the episodic memory. On the other hand, Dual-Net [32] endowed fast-learner with label supervision and slowlearner with unsupervised representation learning thereby decoupling the representation learning from supervised learning. Although these approaches show remarkable improvements over vanilla-ER, these methods replay raw pixels of past experiences, inconsistent with how humans continually learn [19]. In addition, replaying raw pixels can have other ramifications including large memory footprint, data privacy and security concerns [34]. Based on the hippocampal indexing theory [35], hippocampus stores non-veridical [36 37}, high-level representations of neocortical activity patterns while awake. Several works [38, 39] mimic abstract representation rehearsal in brain by storing and replaying representations from intermediate layers in DNNs. Although high-level representation replay can potentially mitigate memory overhead, replaying representations as is over and over leads to overfitting and reduced noise tolerance. Overfitting is one of the main causes of catastrophic forgetting in neural networks.

(ii) Work by [40] studied Vision Transformers in continual learning setting and found three issues when naively applying Transformers in CL, namely, slow convergence of Transformers, bias towards the classes in the current task being learned, and slow learning for the final classifier head. Work by [41] studied the effect of different architecture design choices in catastrophic forgetting and adaptability to new distributions. They used a smaller version of Vision Transformer and found that they have less catastrophic forgetting compared to CNN counterparts. Work by [42] proposed a 'meta-attention' mechanism that learns task-wise self-attention and FFN layer masks. Thus, they reduce catastrophic forgetting by routing the data through different paths in the Transformer encoder for different tasks. DyTox [16] proposed dynamically expanding VT-based architecture for class-incremental continual learning. Using separate task-tokens to model the context of different classes, they were able to outperform other network-expansion approaches.

Presently, known training methods suffer from what is known as "catastrophic forgetting", which refers to the main issue in continual learning where the model overfits to the data from the new task or forgets the information learned from old tasks (when the learning algorithm overwrites weights important to the old tasks while learning new tasks) [8]. Despite recent research in this field, continually learning an accurate model, and performing well on the previously seen classes without catastrophic forgetting is still an open research problem. Furthermore, Vision transformers is still in nascent stage as far as computer vision is considered and representation replay in Transformers has not been explored in the field of continual learning. Different approaches have tried to solve the problem of catastrophic forgetting in neural networks, where a model should retain its learned knowledge about past tasks while learning the new tasks. Catastrophic forgetting occurs due to rewriting of weights in the network which are important to the old tasks while updating the network to learn the new task or overfitting the network on the new task samples. Though experience replay has been found to help mitigate catastrophic forgetting in continual learning, replaying raw pixels can have other ramifications including large memory footprint, data privacy and security concerns [34].

## INVENTION

Accordingly, the present invention aims to combat the persistent problem of **"catastrophic forgetting"** in deep neural networks that are trained on the task of classifying images or recognizing objects or situations within such images, and wherein the invention aims to reduce the persistence of said problem without causing **privacy concerns** and reducing the memory footprint by the method according to claim 1, which represents a first aspect of the invention. To improve training accuracy the second and third function are provided as student and teacher respectively. In such setup, the step of providing memory stored representations of task samples to the third function occurs without providing generated representations of task samples to the third function.

It is noted that changing the first function from adaptable to fixed occurs after the first neural network learns a first task. The fixing of the first function would here relate to parameters of the first function such as weights. This reduction in plasticity after having been fitted to a task prevents forgetting, while still allowing a part of the first neural network to adjust to other, subsequent tasks that are being learned. In a sense, also separate from any other features, the method preferably comprises teaching the first neural network a plurality of tasks, wherein the first function becomes fixed after having been taught a first task of the plurality of tasks.

Beneficially, and for all embodiments, first and second neural networks are preferably designed as vision transformers so as to allow training based on large data volumes, such as a continuous stream of high resolution images.

To ensure that consistency in intermediate representations is learned by the first neural network during the first task and fixed before the onset of future tasks, the first few layers, such as 1-2 layers, or 1-3 layers, of the first function may be used to process veridical inputs, wherein its output, the generated representations of task samples along with a ground truth label are stored to the memory.

Optionally, consolidating task knowledge is performed during intermittent periods of inactivity, such as exclusively during intermittent periods of inactivity. In one example, this is after learning a, or each, task. In an at least partially autonomous vehicle with a camera for generating the training images and a computer for implementing the method according to the invention these periods of inactivity could for example be the periods in which the vehicle is parked or otherwise goes unused for more than a predefined period of time, such as an hour. This prevents that the expected behavior of task performance changes during use, resulting in unexpected behavior for the user of such a vehicle.

It is further possible for the step of consolidating task knowledge across multiple tasks in the third function to comprise aggregating the weights of the second function by exponential moving average to form the weights of the third function. This allows the third function, and thereby the second neural network to effectively act as a teacher to the first network when updating the first neural network.

Optionally, the memory is populated during task training or at a task boundary. Task boundary here means after learning of a task or before the learning of a new task. This could be any task of a plurality of tasks if the method comprises teaching the first neural network to perform a plurality of tasks. In one example generated representations of task samples may be provided to and stored in the memory. Alternatively, the memory is populated prior to task training and gradually replaces the representations with newly generated representations. This allows the method to initially build on semantic memory collected prior to said task training.

Beneficially, stored representations from the memory are learned together with representations of task samples from the first function and provided to the second function. This allows replay of memory to counterbalance new learning experience. Additionally, and further beneficially, the representations stored in the episodic memory are synchronously processed by the second and third function.

To provide the first neural network with optimized learning goals and further prevent overfitting the method may comprise determining a loss function comprising a loss of representation rehearsal and a loss presenting an expected Minkowski distance between corresponding pairs of predictions by the second and third functions, wherein the loss function balances both losses using a balancing parameter, and wherein the first neural network is updated using said loss function.

According to a second aspect of the invention there is provided a data processing apparatus comprising means for carrying out the method according to the first aspect of the invention.

According to a third aspect of the invention there is provided a computer program product comprising instructions which, when the program is executed by a computer, cause the computer to carry out the method according to the first aspect of the invention.

According to a fourth aspect of the invention there is provided an at least partially autonomous driving system comprising at least one camera designed for providing a feed of input images, and a computer designed for classifying and/or detecting objects using the first neural network, wherein said first neural network has been trained using method according to the first aspect of the invention.

**DETAILED DESCRIPTION**

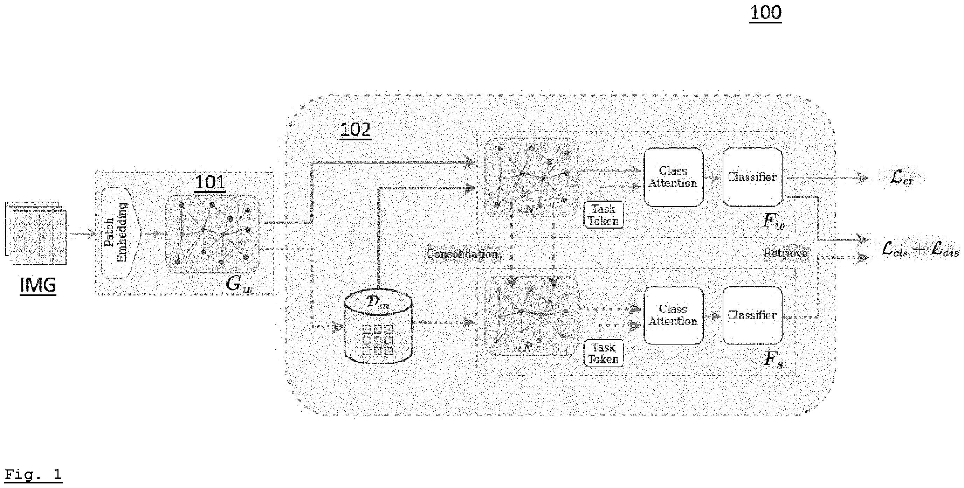

The invention is further elucidated by Figure 1, which schematically represent the training framework in which the method according to the invention is executed.

Figure 1 shows a training framework 100 in which a first neural network consisting of a first function Gw and a second function Fw, and a second neural network consisting of a third function Fs are organized with an episodic memory Dm to form a first Block 101 and a second block 102. This structure organizational structure is, also separately from this example and in all other embodiments, intended to be considered the framework 100.

The first block can in this example be seen as a combination of a patch embedding and a self-attention block and the second block can be seen as brain inspired components proposed in the method. Input images for training are received by the first block comprising the first function Gw via patch embedding. The first function generates representations of task samples and feeds these to the second block. In the second block these generated representations are provided to the second function Fw, and optionally also to the memory Dm. Optionally, because the memory may be pre-populated with representations. In any case, generated and stored task representations are provided to the second function together. Optionally, stored task representations are also provided to the third function Fs. Task knowledge is consolidated in the third function Fs using the exponential moving average of the weights of the second function Fw. After the second function has learned a first task, the first function Gw is changed from adaptable to fixed, in that its weights and structure become unalterable for learning of subsequent tasks. The first and second neural networks are respectively referred to as the working model and the stable model. The stable model is also interchangeable with the term teacher or teacher model.

The present invention is thus shown to replay intermediate representations instead of veridical/raw inputs and utilize exponential moving average of the working model, herein also called the first neural network, as teacher, namely the second neural network, to distill the knowledge of previous tasks.

A methodology is here proposed wherein internal representations of Vision Transformers is replayed instead of raw pixels of an image. This effectively mitigates catastrophic forgetting in continual learning by maintaining an exponential moving average of the first neural network, hereinafter also called the working model, to distill learned knowledge from past tasks. Replaying internal representations here saves memory in applications with large input resolutions and would furthermore eliminate any privacy concerns.

In further detail it should be mentioned that the continual learning paradigm normally consists of T sequential tasks with data becoming progressively available over time. During each task $t \in \{1, 2, .., T\}$, the task samples and corresponding labels $(x_i, y_i)$ $(i=1$ to $N)$ are drawn from the task-specific distribution Dt. The continual learning vision transformer model $f\theta$ is sequentially optimized on one task at a time and the inference is carried out on all tasks seen so far. For DNNs, continual learning is especially challenging as data becoming progressively available over time violates the i.i.d assumption leading to overfitting on the current task and catastrophic forgetting of previous tasks.

Strong empirical evidence suggests an important role for experience rehearsal in consolidating memory in the brain [19]. Likewise, in DNNs, ER stores and replays a subset of previous task samples alongside current task samples. By mimicking the association of past and present experiences in the brain, ER partially addresses the problem of catastrophic forgetting. The learning objective is as follows:

$$\mathcal{L}_{er} \triangleq \underset{(x_i,y_i)\sim\mathcal{D}_t}{\mathbb{E}}\left[\,\mathcal{L}_{ce}(\hat{y}_i, y_i)\,\right] + \alpha \underset{(x_j,y_j)\sim\mathcal{D}_m}{\mathbb{E}}\left[\,\mathcal{L}_{ce}(\hat{y}_j, y_j)\,\right]$$

Equation 1

In equation 1 $\hat{y_i}$, $\hat{y_j}$, are CL model predictions, $\alpha$ represents a balancing parameter, Dm is the memory buffer

and $(\mathcal{L}_{CE})$ is the cross-entropy loss. To further augment ER in mitigating catastrophic forgetting, we employ two complementary learning systems based on abstract, high-level representation replay. The stable and the working model in our proposed method interact with the episodic memory and consolidate information about previous tasks better than vanilla-ER. In the following sections, we elaborate on the working of each component of our proposed method.

In a more detailed example of the invention two Transformerbased complementary systems are proposed - here the first and second neural networks - that acquire and assimilate knowledge over short and long periods of time. The first neural network is here also known as the Working model, and is reminiscent of a hippocampus in a human brain, which encounters new tasks and consolidates knowledge over short periods of time. As the knowledge of the learned tasks is encoded in the weights of the DNNs, weights of the working model are adapted to achieve maximum performance on the current task. However, abrupt changes to the weights causes catastrophic forgetting of older tasks. To consolidate knowledge across tasks, working model gradually aggregates weights into the stable model, here the second neural network, during intermittent stages of inactivity, akin to knowledge consolidation in the neocortex of a human brain.

Knowledge consolidation in the stable model can be done in several ways: keeping a copy of the working model at the end of each task, weight aggregation through exponential moving average (EMA), or by leveraging self-supervision. Reducing complexity of computation weight aggregation through exponential moving average (EMA) is preferred.

The design of the stable model as an exponential moving average of the working model is as follows:

$$\theta_s = \gamma\theta_s + (1 - \gamma)\theta_w$$

Equation 2

where $\theta_w$ and $\theta_s$ are the weights of working and stable models respectively, and $\gamma$ is a decay parameter. As the working model focuses on specializing on the current task, the copy of the working model at each training step can be considered specialized on a particular task. Therefore, aggregation of weights throughout CL training can be deemed as an ensemble of specialized models consolidating knowledge across tasks resulting in smoother decision boundaries.

In line with non-veridical rehearsal in the brain, the invention proposes an abstract, high-level representation rehearsal for transformers. The working model comprises of two nested functions: Gw and Fw. The first few layers, such 1-3 layers, of transformer Gw process veridical inputs and its output (r) along with the ground truth label are stored into an episodic memory Dm. To ensure consistency in intermediate representations, Gw is learned during the first task and fixed before the onset of future tasks. On the other hand, the later layers Fw processes abstract, high-level representations and remains learnable throughout CL training. During intermittent stages of inactivity, the stable counterpart Fs(.) is updated as per Equation 2.

The episodic memory can either be populated during the task training or at the task boundary. The representations stored in the episodic memory are taken together with the current task representations, and are synchronously processed by Fw(.) and Fs(.). The learning objective for representation rehearsal can thus be obtained by adapting Equation 1 as follows:

$$\mathcal{L}_{repr} \triangleq \underset{(x_i,y_i)\sim\mathcal{D}_t}{\mathbb{E}}\left[\mathcal{L}_{ce}(F_w(G_w(x_i)), y_i)\right] + \alpha\underset{(r_j,y_j)\sim\mathcal{D}_m}{\mathbb{E}}\left[\mathcal{L}_{ce}(F_w(r_j), y_j)\right]$$

Equation 3

The method in the framework as shown in Figure 1 basically consists of a working model $\theta_w$ and its EMA as stable model $\theta_s$. The working model further comprises of two nested functions: Gw(.) and Fw(.), while stable model entails only Fs(.), stable counterpart of Fw(.). Initially Gw(.) is learnable, but fixed after learning the first task. During CL training, the working model encounters batches of the task-specific data Dt which are first fed into Gw(.) and the outputs are then taken together with representations of previous task samples from the episodic memory Dm. We update Dm at the task boundary using iCaRL herding [29]. iCaRL is also known as Incremental Classifier and Representation Learning. The person skilled in the art will know that this comprises first populating the memory with training data for a predefined number of classes simultaneously, and subsequently populating the memory with training data for new classes. This distinguishes it from earlier works that were fundamentally limited to fixed data representations and therefore incompatible with deep learning architectures.

The representations which were taken together are then processed by Fw(.) while only the representations of previous task samples are processed by Fs(.).

During intermittent stages of inactivity, the knowledge in the working model is consolidated into the stable model through Equation 2. Although the knowledge of the previous tasks is encoded in the weights of stable model, the weights collectively represent a function (Fs(.)) that maps representations to the outputs [43]. Therefore, to retrieve the structural knowledge encoded in the stable model, we propose to regularize the function learnt by the working model by enforcing consistency in predictions of the working model with respect to the stable model i.e.

$$\mathcal{L}_{cr} \triangleq \mathbb{E}_{(r_j, y_j) \sim D_m} \left\| F_w(r_j) - F_s(r_j) \right\|_p$$

$$\text{Equation 4}$$

Here $\mathcal{L}_{cr}$ represents the expected Minkowski distance between the corresponding pairs of predictions and p $\in \{1, 2, .., \infty\}$. Consistency regularization [48] enables the working model to retrieve structural semantics from the stable model which accounts for the knowledge pertaining to previous tasks. Consequently, the working model adapts the decision boundary for new tasks without catastrophically forgetting previous tasks.

The final learning objective for the working model is as follows:

$$\mathcal{L} \triangleq \mathcal{L}_{repr} + \beta \, \mathcal{L}_{cr}$$

$$\text{Equation 5}$$

where β is balancing parameter. Figure 1 illustrates the complete framework of our proposed approach and the algorithm of continually learning new tasks using the proposed approach is as follows:

---

**Algorithm 1** Learning algorithm for the proposed approach

    **input:** Data streams $\mathcal{D}_t \forall \{t = 1, ..., T\}$, model $\theta_w = F_w(G_w(.))$, buffer $\mathcal{D}_m = \{\}$
1: **for all** tasks $t \in \{1, 2, .., T\}$ **do**
2:     **for** epochs $e \in \{1, 2, .., E\}$ **do**
3:         **for** mini-batch $(x, y) \sim \mathcal{D}_t$ **do**
4:             **if** $\mathcal{D}_m \neq \emptyset$ **then**
5:                 sample a mini-batch $(r', y') \sim \mathcal{D}_m$    ▷ Sample representations, and labels from buffer
6:                 $\ell'_{\theta_w} = F_w(r')$        ▷ Feed representations to working and teacher models
7:                 $\ell'_{\theta_s} = F_s(r')$
8:                 Compute $\mathcal{L}_{cr}$ (Eq. 4)          ▷ Distillation loss for buffered samples
9:             $x = augment(x)$
10:            $\ell_{\theta_w} = F_w(G_w(x))$       ▷ Feed images to working and teacher models
11:            $\ell_{\theta_s} = F_s(G_s(x)$
12:            Compute $\mathcal{L}_{repr}$ (Eq. 3)          ▷ Cross-entropy loss
13:            Compute $\mathcal{L} = \mathcal{L}_{repr} + \mathcal{L}_{cr}$(Eq. 5)
14:            $\theta_w \leftarrow \theta_w + \nabla_{\theta_w} \mathcal{L}$       ▷ Update working model parameters $\theta_w$
15:            **if** $e$ % ema-update-epochs = 0 **then**
16:                 $\theta_s \leftarrow \alpha_s \theta_s + (1 - \alpha_s)\theta_w$     ▷ EMA update for teacher model
17:         **if** task-end = True **then**
18:             **if** t = 1 **then**
19:                 Freeze $G_w(.)$
20:             $\mathcal{D}_m \leftarrow (r, y)$          ▷ Store representations and labels in the buffer
21: **return** model $F_w(G_w(.))$

---

- Road condition monitoring
- Road signs detection

- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible nontransitive memory-storage devices.

**Claims**

1. A computer-implemented method for continual task learning in a training framework, said method comprising the steps of:

   - providing a first deep neural network ($\theta w$), comprising a first function (Gw) and a second function (Fw) which are nested;
   - providing a second deep neural network ($\theta s$) comprising a third function (Fs) as a counterpart to the second nested function (Fw);
   - feeding input images to the first neural network ($\theta w$), such as through a filter and/or via patch embedding;
   - generating representations of task samples using the first function (Gw);
   - providing a memory (Dm) for storing at least some of the generated representations of task samples and/or having pre-stored task representation;
   - providing the generated and memory stored representations of task samples to the second function (Fw);
   - providing memory stored representations of task samples to the third function (Fs).

2. The method according to claim 1, wherein the step of providing memory stored representations of task samples to the third function (Fs) occurs without providing generated representations of task samples to the third function (Fs).

3. The method according to claim 1 or 2, comprising the steps of:

   - consolidating task knowledge over multiple tasks in the third function (Fs) using the second function (Fw); and
   - fixing the parameters of the first function (Gw) after learning a first task before subsequent tasks.

4. The method according to any one of claims 1-3, wherein a first number of layers of the first function (Gw) process veridical inputs, and wherein its output along with a ground truth label are stored to the memory (Dm).

5. The method according to any one of claims 1-4, wherein the step of consolidating task knowledge is performed during intermittent periods of inactivity, such after learning a task.

6. The method according to any one of claims 1-5, wherein the step of consolidating task knowledge across multiple tasks in the third function (Fs) comprises aggregating the weights of the second function (Fw) by exponential moving average to form the weights of the third function.

7. The method according to any one of claims 1-6, wherein the memory is populated during the task training and/or at a task boundary.

8. The method according to claim 7, wherein the memory is update at the task boundary using iCaRL herding.

9. The method according to any one of claims 1-8, wherein at least some generated representations of task samples are provided to and stored in the memory (Dm).

10. The method according to any one of claims 1-9, wherein stored representations from the memory (Dm) are provided together with representations of task samples from the first function to the second function (Fw).

11. The method according to claim 10, wherein the representations stored in the memory are synchronously processed by the second and third function (Fw, Fs).

12. The method according to claim 10 or 11, comprising a step of determining a loss function $\mathcal{L}$ comprising a loss of representation rehearsal $\mathcal{L}_{repr}$ and a loss presenting an expected Minkowski distance $\mathcal{L}_{cr}$ between corresponding pairs of predictions by the second and third functions (Fw, Fs) and wherein the loss function ($\mathcal{L}$) balances both losses (($\mathcal{L}_{repr}, \mathcal{L}_{cr}$ using a balancing parameter ($\beta$), and a step of updating the first neural network ($\theta w$) using said loss function.

13. A data processing apparatus comprising means for carrying out the method of any one of claims 1-12.

14. A computer program product comprising instructions which, when the program is executed by a computer, cause the computer to carry out the method of any one of claims 1-12.

15. An at least partially autonomous driving system comprising at least one camera designed for providing a feed of input images, and a computer designed for classifying and/or detecting objects using the first neural network ($\theta w$), wherein said first neural network ($\theta w$) has been trained using method according to of claims 1-12.

Fig. 1

Europäisches
Patentamt

European
Patent Office

Office européen
des brevets

# EUROPEAN SEARCH REPORT

Application Number

EP 22 19 2695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wu Jay Zhangjie ET AL: "Label-Efficient Online Continual Object Detection in Streaming Video", ,<br>1 June 2022 (2022-06-01), XP093023144,<br>Retrieved from the Internet:<br>URL:https://arxiv.org/pdf/2206.00309.pdf<br>[retrieved on 2023-02-13]<br>* the whole document *<br>----- | 1-15 | INV.<br>G06F16/55<br>G06N3/0455<br>G06N3/096<br>G06N3/09<br>G06V10/82 |
| A | Bhat Prashant ET AL: "Consistency is the key to further mitigating catastrophic forgetting in continual learning", ,<br>11 July 2022 (2022-07-11), XP093023067,<br>DOI: 10.48550/arxiv.2207.04998<br>Retrieved from the Internet:<br>URL:https://arxiv.org/pdf/2207.04998.pdf<br>[retrieved on 2023-02-13]<br>* the whole document *<br>----- | 1-15 | |

TECHNICAL FIELDS
SEARCHED        (IPC)

G06F
G06N
G06V

The present search report has been drawn up for all claims

| Place of search | Date of completion of the search | Examiner |
|---|---|---|
| The Hague | 14 February 2023 | Ntarlagiannis, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                   

& : member of the same patent family, corresponding
document

EPO FORM 1503 03.82 (P04C01)